# EUROPEAN PATENT APPLICATION

(11) **EP 3 974 887 A1**
(43) Date of publication of application: **30.03.2022**
(21) Application number: 20924115.7
(22) Date of filing: 10.09.2020
(51) Int. Cl.: G02B 17/08, G03B 17/17, H04N 5/225

(54) **OPTICAL SYSTEM, ELECTRONIC DEVICE AND DISPLAY APPARATUS**

(30) Priority: 13.03.2020 WO PCT/CN2020/079372
(71) Applicant: Huawei Technologies Co., Ltd., Shenzhen, Guangdong 518129 (CN)
(72) Inventor: LI, Can, Shenzhen, Guangdong 518129 (CN); ZHANG, Haiyang, Shenzhen, Guangdong 518129 (CN); CHEN, Yong, Shenzhen, Guangdong 518129 (CN); LUO, Zhen, Shenzhen, Guangdong 518129 (CN)
(74) Representative: Maiwald Patent- und Rechtsanwaltsgesellschaft mbH
(86) International application number: PCT/CN2020/114564
(87) International publication number: WO 2021/179560

(57) **Abstract**

An optical system, an electronic device, and a display apparatus are provided. The optical system includes a camera module, an optical reflection component, and a first driving component. The camera module is fixed in a position. The camera module is opposite to a front surface of the optical reflection component. The optical reflection system can reflect, to the camera module, light projected onto the optical reflection component, and the camera module can capture an image by using the light reflected to the camera module. The first driving component can drive the optical reflection component to rotate in a first direction. In the optical system, the camera module is fixed in the position, and a direction of the optical reflection component may be adjusted by using the first driving component, so that the camera module can capture images in all directions without rotation of the camera module. This effectively shortens a time for the camera module to shoot the images. In the entire optical system, components that need to move are the optical reflection component and the first driving component, and moving load is relatively small. This helps implement efficient movement and helps the camera module to capture the images.

## Description

### CROSS-REFERENCE TO RELATED APPLICATIONS

This application claims priority to Chinese Patent Application No. PCT/CN2020/079372, filed with China National Intellectual Property Administration on March 13, 2020 and entitled "OPTICAL SYSTEM AND ELECTRONIC DEVICE", which is incorporated herein by reference in its entirety.

### TECHNICAL FIELD

This application relates to the field of electronic component technologies, and in particular, to an optical system, an electronic device, and a display apparatus.

### BACKGROUND

To ensure city security, video surveillance devices are disposed in some places in a city. A video surveillance device with a single camera can monitor a limited range. To further increase a monitoring range, a multi-camera video surveillance device appears.

However, the monitoring range that can be increased by the multi-camera video surveillance device is still limited, and a large quantity of cameras increase deployment difficulty. A camera video surveillance device with a fast cycle scanning function (for example, a dome camera) replaces the multi-camera video surveillance device due to advantages such as a larger monitoring range and flexible deployment of the camera video surveillance device with the fast cycle scanning function.

The dome camera is used as an example. A camera in the dome camera can rotate 360 degrees at a relatively high speed, in other words, can implement the fast cycle scanning function. Generally, when the dome camera captures an image, the camera in the dome camera needs to rotate to a specific position and shoot in a stable state.

When the camera in the dome camera rotates, the camera, a light compensation module, and related driving components (such as a motor and a bearing) need to move together, resulting in heavy load. When the camera rotates to the specific position, due to inertia of the camera, the light compensation module, and the related driving components (such as the motor and the bearing), it takes a long time for the camera to reach the stable state. In other words, it takes a long time for the dome camera to take a snapshot when performing cycle scanning.

In conclusion, a manner in which the camera is driven to rotate in the camera video surveillance device with the fast cycle scanning function limits a snapshot speed of the video surveillance device.

### SUMMARY

This application provides an optical system, an electronic device, and a display apparatus, to improve a snapshot speed of a camera video surveillance device with a fast cycle scanning function.

According to a first aspect, an embodiment of this application provides an optical system. The optical system includes a camera module, an optical reflection component, and a first driving component. The camera module in the optical system is fixed in a position and does not rotate or move. The camera module is opposite to a front surface of the optical reflection component. The optical reflection system can reflect, to the camera module, light projected onto the optical reflection component. In this way, the camera module can capture an image by using the light reflected to the camera module. The first driving component can change a position of the optical reflection component, and drive the optical reflection component to rotate in a first direction.

By using the foregoing optical system, the camera module is fixed in the position. A direction of the optical reflection component may be adjusted by using the first driving component, so that the camera module can capture images in all directions without rotation of the camera module. This effectively shortens a time for the camera module to shoot the image. In addition, in the entire optical system, components that need to move are the optical reflection component and the first driving component, and load is relatively small in a movement process. This helps implement efficient movement and helps the camera module to capture the images.

In a possible implementation, in addition to the first driving component, the optical system may further include another driving component, to implement rotation of the optical reflection component in a direction other than the first direction. For example, the optical system further includes a second driving component, where the second driving component may drive the optical reflection component to rotate in a second direction. The first direction is different from the second direction.

By using the foregoing optical system, the optical reflection component can rotate in a plurality of different directions, so that the optical reflection component can reflect light in the different directions, so that the camera module can capture images in a plurality of directions, and a shooting range is larger.

In a possible implementation, the camera module may be fixedly disposed in a horizontal direction (a direction perpendicular to a gravity direction), or may be fixedly disposed in a gravity direction.

By using the foregoing optical system, the camera module is disposed in a fixed direction, and a disposition position is more flexible.

In a possible implementation, the camera module is located below the optical reflection component, or may be located above the optical reflection component. There are a plurality of positions of the camera module and there are a plurality of positions of the optical reflection component, and the camera module and the optical reflection component may be used for different scenarios. For example, when the camera module is located above the optical reflection component, the camera module can be used for a surveillance scenario, for example, traffic road surveillance. When the camera module is located below the optical reflection component, the camera module can be used for a remote conference, for example, the camera module is disposed above a display apparatus to shoot participants.

In a possible implementation, there are a plurality of manners in which the first driving component drives the optical reflection component. For example, a motor may be used to drive the optical reflection component to rotate. For example, the first driving component includes a first motor and a first bearing. The first motor is configured to drive the first bearing, so that the first bearing drives the optical reflection component to rotate in the first direction.

By using the foregoing optical system, the first driving component can drive the optical reflection component to rotate in a relatively convenient manner by using the first motor and the first bearing.

In a possible implementation, similar to the first driving component, the second driving component includes a second motor and a second bearing. The second bearing is connected to the optical reflection component. The second motor is configured to drive the second bearing, so that the second bearing drives the optical reflection component to rotate in the second direction.

By using the foregoing optical system, the second driving component can drive the optical reflection component to rotate in a relatively convenient manner by using the second motor and the second bearing.

In a possible implementation, the first bearing may be connected to a back surface or a side surface of the optical reflection component, so that the first motor drives the optical reflection component to rotate.

In a possible implementation, the first bearing may alternatively be connected to the second motor through a connecting rod, and the optical reflection component can rotate in the two different directions through the connecting rod.

In a possible implementation, a surface form of the optical reflection component may be fixed, in other words, the optical reflection component may be a surface-form fixed reflector. A surface form of the surface-form fixed reflector is one of the following:
a plane, a convex surface, a concave surface, a diffraction surface, and a free-form surface.

By using the foregoing optical system, a plurality of surface forms of the optical reflection component are selected, so that different imaging requirements of the camera module can be ensured.

In a possible implementation, the optical reflection component is a surface-form variable reflector, and the surface-form variable reflector may be one of the following:
a micromirror array and a liquid reflector.

By using the foregoing optical system, the surface-form variable reflector can change a reflection surface of the surface-form variable reflector, so that the surface-form variable reflector is used for a plurality of different application scenarios, a control manner is more flexible, and an application range of the optical system is extended.

In a possible implementation, the optical reflection component may be an optical reflection component coated on one surface, in other words, only one surface can reflect light. Alternatively, the optical reflection component may be an optical reflection component coated on two surfaces, in other words, two surfaces both can reflect light. Because the two surfaces of the optical reflection component coated on two surfaces both can reflect light, when the first driving component and the second driving component drive the optical reflection component, the optical reflection component coated on two surfaces can rotate to a surface capable of reflecting light only by a relatively small angle, thereby reducing a rotation time of the optical reflection component. In addition, a range of light that can be reflected by the optical reflection component coated on two surfaces also increases, so that the shooting range of the camera module increases.

In a possible implementation, the first direction is perpendicular to the second direction. The optical reflection component can rotate in the two directions perpendicular to each other, so that the optical reflection component can rotate in all directions, thereby further ensuring the shooting range of the camera module.

In a possible implementation, the second direction may be the gravity direction. In other words, one rotation direction of the optical reflection component is the gravity direction.

In a possible implementation, the second bearing is connected to a side surface or a back surface of the reflection optical component.

By using the foregoing optical system, the second bearing may be connected to the back surface or the side surface of the optical reflection component, so that the second motor drives the optical reflection component to rotate.

In a possible implementation, the optical system further includes a bracket, and the first driving component is connected to the camera module by using the bracket.

By using the foregoing optical system, the first driving component can be supported, so that the optical reflection component can be driven to rotate.

In a possible implementation, the optical system further includes a housing, and the housing is located outside the camera module.

By using the foregoing optical system, the housing is disposed outside the camera module, and can protect the camera module from damage. In a possible implementation, the optical system further includes a transparent dome cover. The transparent dome cover is connected to the housing, and is located outside the first driving component and the optical reflection component.

By using the foregoing optical system, the transparent dome cover can protect other components in the optical system on the premise that the optical reflection component can work normally.

According to a second aspect, an embodiment of this application provides an electronic device, including a processor and an image-shooting apparatus, where the image-shooting apparatus includes the optical system in any one of the first aspect and the possible implementations of the first aspect.

According to a third aspect, an embodiment of this application provides an optical system. The optical system includes a camera module, an optical reflection component, and a first driving component. The camera module is opposite to a front surface of the optical reflection component. The optical reflection system can reflect, to the camera module, light projected onto the optical reflection component. In this way, the camera module can capture an image by using the light reflected to the camera module. The first driving component can change a position of the optical reflection component, and drive the optical reflection component to rotate in a first direction. The camera module may not rotate, so that a time for the camera module to shoot the image can be effectively shortened. In the entire optical system, components that need to move are the optical reflection component and the first driving component, and load is relatively small in a movement process. This helps implement efficient movement and helps the camera module to capture the image.

In a possible implementation, in addition to the first driving component, the optical system may further include another driving component, to implement rotation of the optical reflection component in a direction other than the first direction. For example, the optical system further includes a second driving component, and the second driving component may drive the optical reflection component to rotate in a second direction. The first direction is different from the second direction. The optical reflection component can reflect light in different directions, so that the camera module can capture images in a plurality of directions, and a shooting range is larger.

In a possible implementation, the camera module may be disposed in a horizontal direction (a direction perpendicular to a gravity direction), or may be disposed in a gravity direction. A disposition position of the camera module is relatively flexible, and is applicable to different application scenarios.

In a possible implementation, there are a plurality of manners in which the first driving component drives the optical reflection component. For example, a motor may be used to drive the optical reflection component to rotate. For example, the first driving component includes a first motor and a first bearing. The first motor is configured to drive the first bearing, so that the first bearing drives the optical reflection component to rotate in the first direction. The first driving component may alternatively drive the camera module to rotate in a similar manner. This manner is simpler and more convenient.

In a possible implementation, similar to the first driving component, the second driving component includes a second motor and a second bearing. The second bearing is connected to the optical reflection component. The second motor is configured to drive the second bearing, so that the second bearing drives the optical reflection component to rotate in the second direction. The second driving component may alternatively drive the camera module to rotate in a similar manner. This manner is simpler and more convenient.

In a possible implementation, the first bearing may be connected to a back surface or a side surface of the optical reflection component, so that the first motor drives the optical reflection component to rotate.

In a possible implementation, the first bearing may alternatively be connected to the second motor through a connecting rod, and the optical reflection component can rotate in the two different directions through the connecting rod.

In a possible implementation, a surface form of the optical reflection component may be fixed, in other words, the optical reflection component may be a surface-form fixed reflector. A surface form of the surface-form fixed reflector is one of the following:
a plane, a convex surface, a concave surface, a diffraction surface, and a free-form surface.

In a possible implementation, the optical reflection component is a surface-form variable reflector, and the surface-form variable reflector may be one of the following:
a micromirror array and a liquid reflector.

In a possible implementation, the optical reflection component may be an optical reflection component coated on one surface, in other words, only one surface can reflect light. Alternatively, the optical reflection component may be an optical reflection component coated on two surfaces, in other words, two surfaces both can reflect light. Because the two surfaces of the optical reflection component coated on two surfaces both can reflect light, when the first driving component and the second driving component drive the optical reflection component, the optical reflection component coated on two surfaces can rotate to a surface capable of reflecting light only by a relatively small angle, thereby reducing a rotation time of the optical reflection component. In addition, a range of light that can be reflected by the optical reflection component coated on two surfaces also increases, so that the shooting range of the camera module increases.

In a possible implementation, the first direction is perpendicular to the second direction. The optical reflection component can rotate in the two directions perpendicular to each other, so that the optical reflection component can rotate in all directions, thereby further ensuring the shooting range of the camera module.

In a possible implementation, the second direction may be the gravity direction. In other words, one rotation direction of the optical reflection component is the gravity direction.

In a possible implementation, the second bearing is connected to a side surface or a back surface of the reflection optical component.

By using the foregoing optical system, the second bearing may be connected to the back surface or the side surface of the optical reflection component, so that the second motor drives the optical reflection component to rotate.

In a possible implementation, the optical system further includes a bracket, and the first driving component is connected to the camera module by using the bracket.

By using the foregoing optical system, the first driving component can be supported, so that the optical reflection component can be driven to rotate.

In a possible implementation, the optical system further includes a housing, and the housing is located outside the camera module.

In a possible implementation, the optical system further includes a transparent dome cover. The transparent dome cover is connected to the housing, and is located outside the first driving component and the optical reflection component.

According to a fourth aspect, an embodiment of this application provides an electronic device, including a processor and an image-shooting apparatus, where the image-shooting apparatus includes the optical system in any one of the second aspect and the possible implementations of the second aspect.

According to a fifth aspect, an embodiment of this application provides a display apparatus, including the optical system in the second aspect and the possible implementations of the second aspect. The optical system is located above the display apparatus. A type of the display apparatus is not limited herein. All devices having a display function are used for this embodiment of this application. For example, the display apparatus may be a device, for example, a television, a display screen, or a smart screen.

### BRIEF DESCRIPTION OF DRAWINGS

FIG. 1A is a schematic diagram of disposing a dome camera;
FIG. 1B is a structural diagram of a dome camera;
FIG. 2 is a schematic structural diagram of an optical system according to this application;
FIG. 3A is a schematic front view of a first driving component and an optical reflection component according to this application;
FIG. 3B is a schematic rear view of a first driving component and an optical reflection component according to this application;
FIG. 4A is a schematic front view of a first driving component and an optical reflection component according to this application;
FIG. 4B is a schematic rear view of a first driving component and an optical reflection component according to this application;
FIG. 4C is a schematic diagram of connecting a first bearing to an optical reflection component according to this application;
FIG. 5 is a schematic structural diagram of an optical system according to this application;
FIG. 6A is a schematic front view of a first driving component, a second driving component, and an optical reflection component according to this application;
FIG. 6B is a schematic rear view of a first driving component, a second driving component, and an optical reflection component according to this application;
FIG. 7A to FIG. 7C are schematic diagrams of optical paths of light reflected by an optical reflection component according to this application;
FIG. 8 is an optical path diagram when a surface form of an optical reflection component is a concave surface according to this application;
FIG. 9A is an optical path diagram when a surface form of an optical reflection component is a convex surface according to this application;
FIG. 9B is a schematic front view of a first driving component, a second driving component, and an optical reflection component according to this application;
FIG. 9C is a schematic rear view of a first driving component, a second driving component, and an optical reflection component according to this application;
FIG. 9D is a schematic front view of a first driving component, a second driving component, a camera module, and an optical reflection component according to this application;
FIG. 10 is a schematic structural diagram of an optical system according to this application;
FIG. 11 is a schematic structural diagram of a side surface of an optical system according to this application;
FIG. 12 is a schematic structural diagram of an optical system according to this application;
FIG. 13 is a schematic diagram of rotation directions of an optical reflection component and a camera module that are in an optical system according to this application;
FIG. 14 is a schematic structural diagram of an optical system according to this application;
FIG. 15 is a schematic diagram of rotation directions of an optical reflection component and a camera module that are in an optical system according to this application;
FIG. 16 is a schematic diagram of a disposition position of an image-shooting component; and
FIG. 17 is a schematic cross-sectional structural diagram of an optical system according to this application.

### DESCRIPTION OF EMBODIMENTS

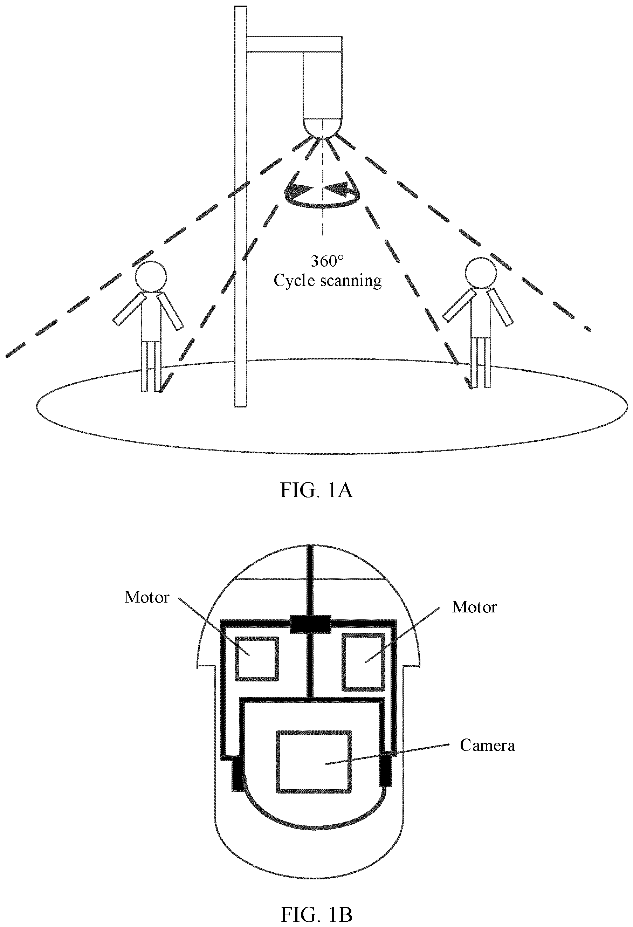

FIG. 1A is a schematic diagram of disposing a dome camera. The dome camera is fixedly disposed at a specific height, and a camera in the dome camera may rotate 360 degrees, to capture pedestrian traffic from various directions at a place in which the dome camera is disposed.

FIG. 1B is a schematic structural diagram of a dome camera. FIG. 1B shows main components included in the dome camera, such as a camera and two motors. The camera may rotate driven by the two motors.

In a rotation process of the camera, overall load includes most components (such as the motors and the camera) of the dome camera. The load is heavy. According to statistics, an average snapshot speed of the dome camera is 0.2 frames per second. In other words, the dome camera can shoot one frame of image every five seconds. For a video surveillance device, the snapshot speed is applicable only to a place with low pedestrian traffic. When there is large pedestrian traffic, the snapshot speed is relatively low. This results in a problem that the dome camera may miss capturing an image, and a better surveillance effect cannot be achieved.

Therefore, an embodiment of this application provides an optical system. The optical system includes a camera module that can capture an image, an optical reflection component, and a first driving component. In the optical system, the optical reflection component can reflect light to the fixedly disposed camera module. The camera module may take a snapshot by using the optical reflection component. The first driving component can drive the optical reflection component to move. In this way, the optical reflection component can reflect light in different directions, and the camera module can capture images in different directions. In the optical system, the camera module is relatively fixed, and only a direction of the optical reflection component needs to be adjusted, so that the camera module can capture the images in the different directions , and a period of time for the camera module to rotate and reach a stable state is omitted. In this way, a period of time for the camera module to shoot the images can be effectively shortened. In addition, in the entire optical system, components that need to move are the optical reflection component and the first driving component, and load is relatively small in a movement process. This helps implement efficient movement and helps the camera module to capture the images.

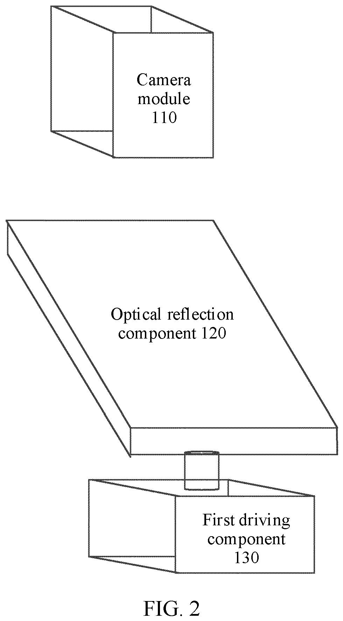

The following describes an optical system provided in this embodiment of this application with reference to the accompanying drawings. Refer to FIG. 2. The optical system includes a camera module 110, an optical reflection component 120, and a first driving component 130.

The camera module 110 is fixedly disposed, and the camera module 110 is opposite to a front surface of the optical reflection component 120. In FIG. 2, the camera module 110 is disposed above the optical reflection component 120.

The optical reflection component 120 can reflect, to the camera module 110, light projected onto the optical reflection component 120, and the camera module 110 may capture an image by using the optical reflection component 120. In other words, the camera module 110 may perform imaging by using the light that enters the camera module 110.

The first driving component 130 may drive the optical reflection component 120 to rotate in a first direction. Driven by the first driving component 130, the optical reflection component 120 can reflect light in different directions to the camera module 110.

A manner in which the first driving component 130 drives the optical reflection component 120 is not limited in this embodiment of this application. For example, the first driving component 130 may drive the optical reflection component 120 to rotate by using magnetic force (for example, the optical reflection component 120 is driven to rotate by acting force between magnetic poles). The first driving component 130 may alternatively drive the optical reflection component 120 to rotate by using an electromagnetic field (for example, the optical reflection component 120 is driven to rotate by action between a current and a magnetic field). For another example, the first driving component 130 may alternatively drive the optical reflection component 120 to rotate in a mechanical manner (for example, by using a torsion spring or a motor).

A specific direction of the first direction is not limited in this embodiment of this application. For example, the first direction may be a gravity direction (which may also be referred to as a perpendicular direction, a vertical direction, or a vertical rotation direction in this embodiment of this application), or a direction at a specific angle to the gravity direction, for example, a horizontal direction (the horizontal direction is 90 degrees from the gravity direction, and the horizontal direction may also be referred to as a horizontal rotation direction).

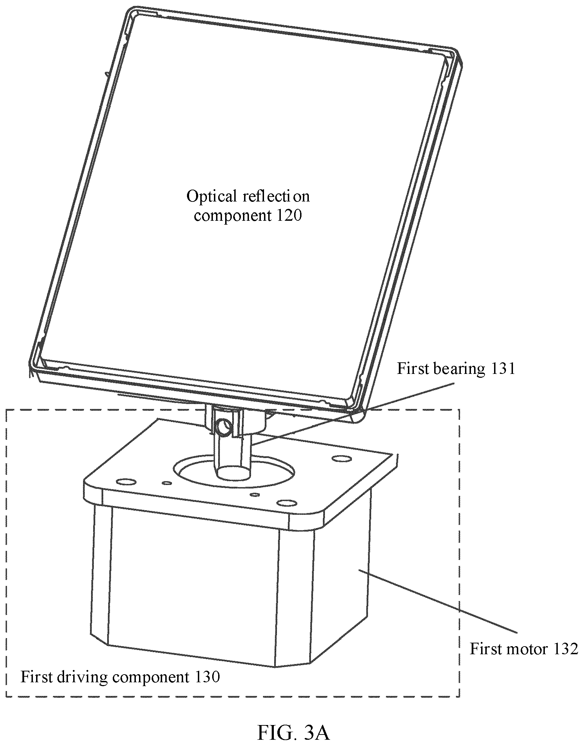

The following describes a structure of the first driving component 130 provided in this embodiment of this application by using an example in which the first direction is the horizontal direction. FIG. 3A is a schematic front view of the first driving component 130 and the optical reflection component 120. The first driving component 130 is disposed below the optical reflection component 120 and is opposite to a back surface of the optical reflection component 120. The first driving component 130 includes a first bearing 131 and a first motor 132, and the first bearing 131 is connected to the optical reflection component 120.

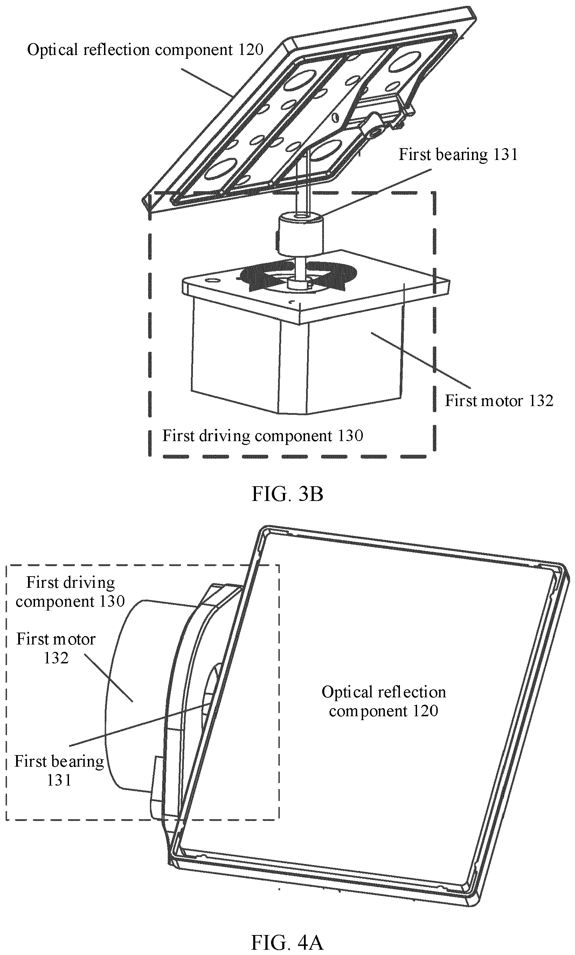

FIG. 3B is a schematic rear view of the first driving component 130 and the optical reflection component 120, and the first bearing 131 is connected to the back surface of the optical reflection component.

The first motor 132 may drive the first bearing 131, so that the first bearing may rotate in the horizontal direction, and under action of the first bearing 131, the optical reflection component 120 may be driven to rotate in the horizontal direction.

When the optical reflection component 120 rotates in the horizontal direction, the optical reflection component 120 may rotate 360 degrees on a horizontal plane. In this way, in a rotation process, light in all directions may be projected onto the optical reflection component 120. The camera module may capture images in all directions on the horizontal plane by using the optical reflection component 120. In addition, in a process of capturing the images, the camera module 110 does not need to be rotated, thereby effectively shortening a time for capturing the images.

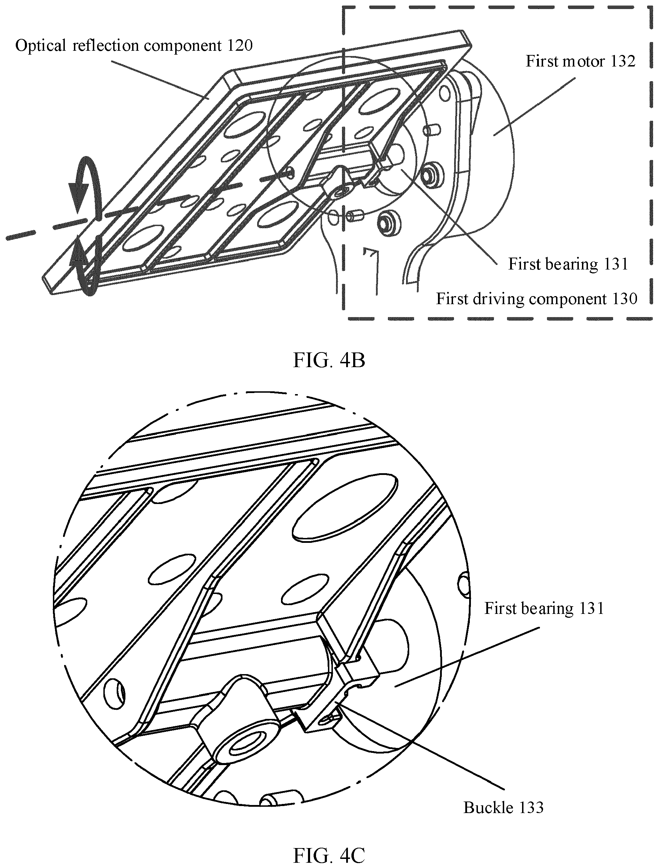

The following describes the structure of the first driving component 130 provided in this embodiment of this application by using an example in which the first direction is the perpendicular direction. As shown in FIG. 4A, the first driving component 130 is disposed on a side surface of the optical reflection component 120, and the first driving component 130 includes the first motor 132 and the first bearing 131. The first bearing 131 is connected to the optical reflection component 120. FIG. 4B is a schematic rear view of the first driving component 130 and the optical reflection component 120. The first bearing 131 is connected to the side surface of the optical reflection component 120.

For a clearer connection manner of the optical reflection component 120 and the first bearing 131, refer to FIG. 4C. A buckle 133 is disposed on the side surface of the optical reflection component 120, and the first bearing 131 may be clamped on the buckle 133.

The first motor 132 may drive the first bearing 131, so that the first bearing 131 may rotate in the perpendicular direction. In this way, under the action of the first bearing 131, the optical reflection component 120 may be driven to rotate in the perpendicular direction.

When the optical reflection component 120 rotates in the perpendicular direction, the optical reflection component 120 may rotate 360 degrees on a perpendicular plane (namely, a gravity plane). In this way, in the rotation process, the light in all directions may be projected onto the optical reflection component 120. The camera module 110 may capture the images in all directions on the perpendicular plane by using the optical reflection component 120. In addition, in the process of capturing the images, the camera module 110 does not need to be rotated, thereby effectively shortening the time for capturing the images.

In the optical system shown in FIG. 3A and FIG. 3B and FIG. 4A to FIG. 4C, the camera module 110 may shoot images in all directions of the first direction. To further expand a shooting range of the camera module 110, the optical system may further include another driving component, to drive the optical reflection component 120 to rotate in another direction.

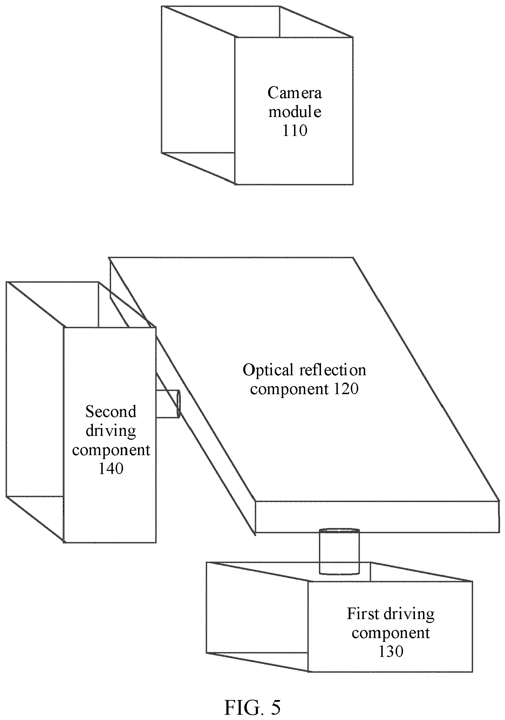

FIG. 5 shows an optical system according to an embodiment of this application. The optical system includes a camera module 110, an optical reflection component 120, a first driving component 130, and a second driving component 140. The second driving component 140 may drive the optical reflection component 120 to rotate in a second direction. A first direction is different from the second direction.

A structure of the first driving component 130 is similar to a structure of the second driving component 140. For details, refer to the structure of the first driving component 130. Details are not described herein again. Similar to the first driving component 130, a manner in which the second driving component 140 drives the optical reflection component 120 is not limited in this embodiment of this application, and a specific direction of the second direction is not limited.

A process in which the first driving component 130 drives the optical reflection component 120 to rotate and a process in which the second driving component 140 drives the optical reflection component 120 to rotate may be separately performed, in other words, only one driving component drives the optical reflection component 120 to rotate at a same time.

The process in which the first driving component 130 drives the optical reflection component 120 to rotate and the process in which the second driving component 140 drives the optical reflection component 120 to rotate may alternatively be performed simultaneously, in other words, one driving component and the other driving component can drive the optical reflection component 120 to rotate at the same time.

To enable both the first driving component 130 and the second driving component 140 to drive the optical reflection component 120 to rotate, a connection may be established between the first driving component 130 and the second driving component 140.

The following describes a connection manner of the first driving component 130 and the second driving component 140 to the optical reflection component 120 by using an example in which the first direction is a horizontal direction (namely, a gravity direction) and the second direction is a perpendicular direction.

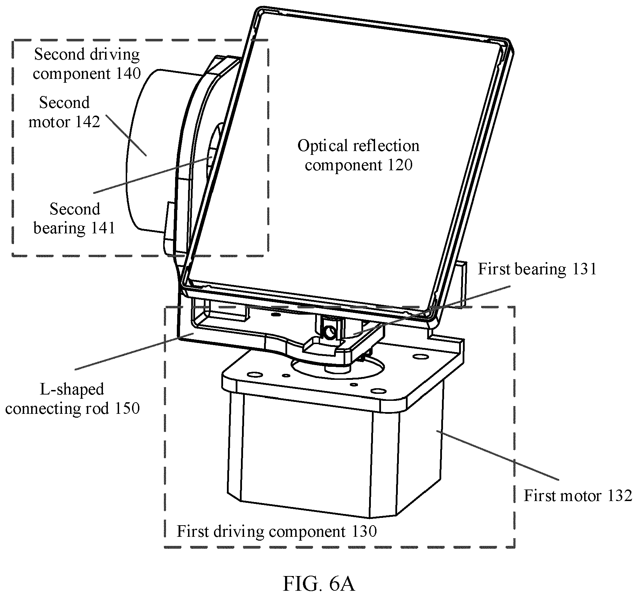

FIG. 6A is a schematic front view of the first driving component 130, the second driving component 140, and the optical reflection component 120. The first driving component 130 includes a first motor 132 and a first bearing 131, where the first bearing 131 is connected to the optical reflection component 120. The second driving component 140 includes a second motor 142 and a second bearing 141, where the second bearing 141 is connected to the optical reflection component 120. The first bearing 131 and the second bearing 141 may be connected through a connecting rod. As shown in FIG. 6A, the second bearing 141 is connected to a side surface of the optical reflection component 120. The first bearing 131 is connected to the second motor 142 through an L-shaped connecting rod 150. When the first motor 132 drives the first bearing 131, the first bearing 131 drives the second driving component 140 and the optical reflection component 120 to rotate in the horizontal direction through the L-shaped connecting rod 150.

The second motor 142 may drive the second bearing 141, and under action of the second bearing 141, the optical reflection component 120 may be driven to rotate in the perpendicular direction.

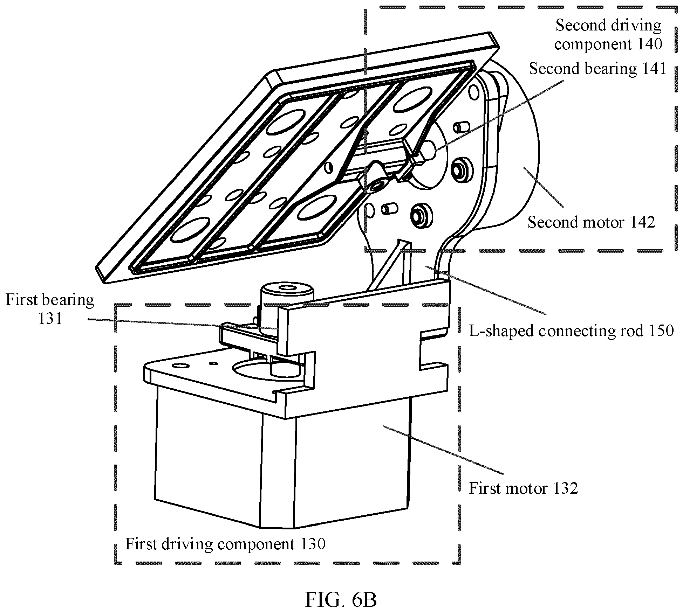

FIG. 6B is a schematic rear view of the first driving component 130, the second driving component 140, and the optical reflection component 120. The first bearing 131 and the second bearing 141 are connected through the L-shaped connecting rod 150.

Because a moving component that rotates about an axis can rotate only about one axis passing through the moving component, and cannot independently rotate about a plurality of axes passing through the moving component, to ensure that both the first driving component 130 and the second driving component 140 can drive the optical reflection component 120 to rotate, the connecting rod may be used to connect the first bearing 131 and the second driving component 140. One end of the L-shaped connecting rod 150 is connected to the first bearing 131, to ensure that all components (including the optical reflection component 120) on the L-shaped connecting rod 150 can rotate driven by the first bearing 131. The second driving component 140 is mounted on the other end of the L-shaped connecting rod 150, where the second bearing 141 is connected to the optical reflection component 120. Rotation of the optical reflection component 120 around the second bearing 141 may be implemented. In this way, the optical reflection component 120 can not only rotate in the perpendicular direction driven by the second bearing 141, but also rotate in the horizontal direction driven by the first bearing 131 and the L-shaped connecting rod 150.

It should be noted that a shape of the connecting rod is not limited in this embodiment of this application. In FIG. 6A and FIG. 6B, only an example in which the connecting rod is the L-shaped connecting rod 150 is used for description.

A disposition position of the camera module 110 is not limited in this embodiment of this application. For example, the camera module 110 may be vertically disposed, or may be horizontally disposed. In this embodiment of this application, only an example in which the camera module 110 is vertically disposed is used for description.

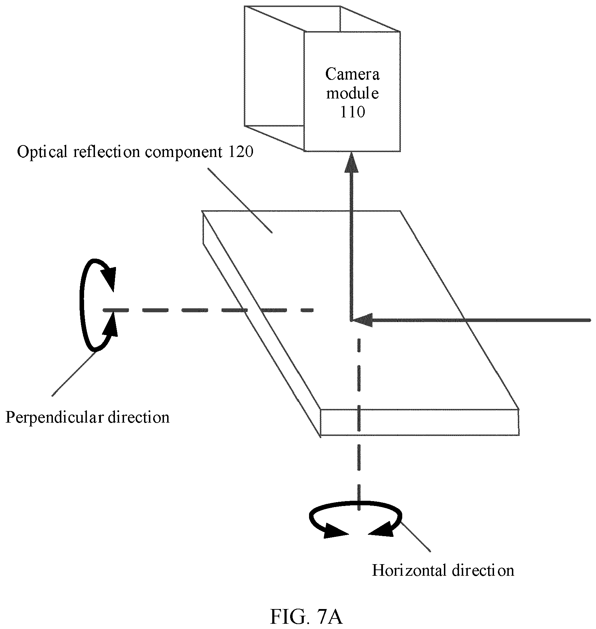

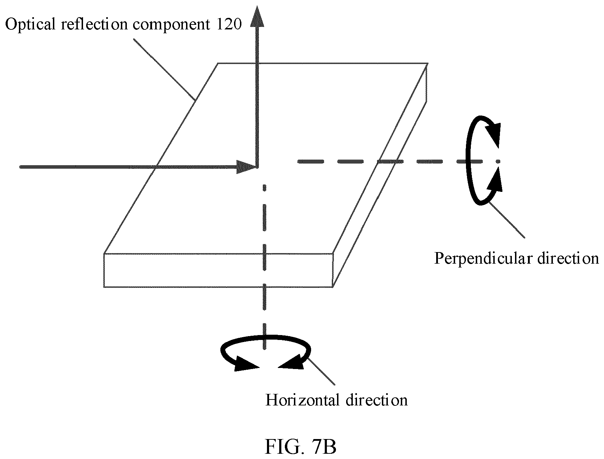

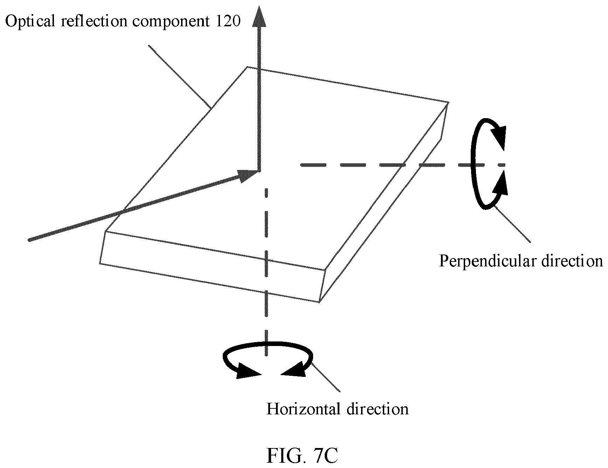

FIG. 7A to FIG. 7C are schematic diagrams of optical paths of light reflected by the optical reflection component 120. In FIG. 7A to FIG. 7C, a position of the optical reflection component may be adjusted by using the first driving component 130 and the second driving component 140, so that light in different directions can be projected onto the optical reflection component 120. The light is reflected to the camera module 110 under action of the optical reflection component 120. In this way, the camera module 110 may shoot images of all directions .

Imaging quality of the image captured by the camera module 110 and a coverage range of the image are related to a surface form of the optical reflection component 120. The surface form of the optical reflection component 120 is not limited in this embodiment of this application. The surface form of the optical reflection component 120 is one of the following surface forms: a plane, a convex surface, a concave surface, a diffraction surface, and a free-form surface.

When the surface form of the optical reflection component 120 is the plane, a reflection surface is a plane, and light reflection may be implemented according to a reflection principle, thereby ensuring that the camera module 110 can effectively perform imaging.

When the surface form of the optical reflection component 120 is the concave surface, compared with when the surface form of the optical reflection component 120 is the plane, the optical reflection component 120 can project more light onto the camera module 110.

When the surface form of the optical reflection component 120 is the convex surface, compared with when the surface form of the optical reflection component 120 is the plane, an angle at which light is projected onto the optical reflection component 120 is larger.

When the surface form of the optical reflection component 120 is the diffraction surface or the free-form surface, compared with when the surface form of the optical reflection component 120 is the plane, the light projected onto the optical reflection component 120 can be diffracted or reflected, and aberration caused during light imaging can be calibrated, thereby ensuring final quality of the image shot by the camera module 110.

The diffraction surface and the free-form surface are special surface forms in an optical design. A relief structure of two or more step depths is generated through etching on a surface of a conventional optical element, to form a diffractive optical element (diffractive optical elements, DOE). A reflection surface of the DOE is the diffraction surface, and the DOE may be used as a reflection optical component. For a conventional lens, a refractive index of blue light is larger than a refractive index of red light. However, for the diffraction surface, the refractive index of the red light is larger than the refractive index of the blue light, so that chromatic aberration of the optical system can be corrected more conveniently. An optical reflection component with the free-form surface may be formed by using a processing procedure of discontinuous processing. The free-form surface is arbitrary, and parameters of the free-form surface are relatively complex (for example, having a plurality of curvatures). The free-form surface also has an advantage of calibrating aberration.

The following describes impact of different optical reflection components 120 on the images captured by the camera module 110 by using a manner in which a concave-surface optical reflection component and a convex-surface optical reflection component reflect light as an example.

### (1) The surface form of the optical reflection component 120 is the concave surface

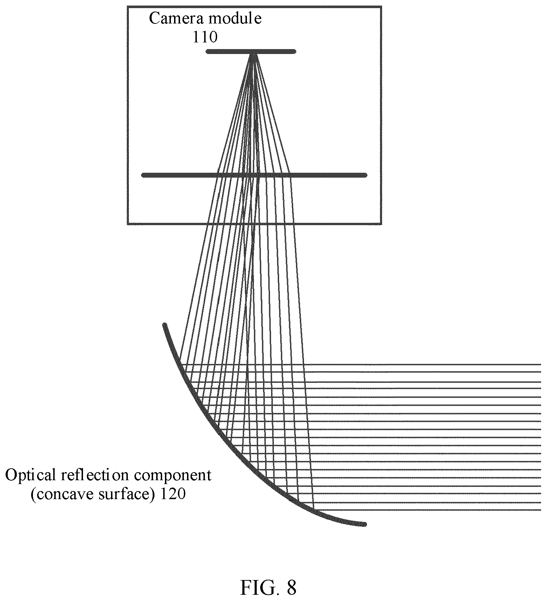

FIG. 8 is an optical path diagram when the surface form of the optical reflection component 120 is the concave surface. When the reflection surface is the concave surface, the optical reflection component 120 can compress incident light into reflected light with a smaller range, and project the reflected light onto the camera module 110. In other words, the concave-surface optical reflection component can compress a light beam. Compared with a plane optical reflection component, more light can enter the camera module 110 by using the concave-surface optical reflection component, thereby increasing luminous flux of the camera module 110, thereby achieving an effect of increasing an aperture. In addition, the concave-surface optical reflection component lengthens optical back focus length, so that the camera module 110 can shoot a distant scene (similar to that a person with near-sighted eyes can see the distant scene clearly after wearing glasses).

Table 1 is a comparison table of apertures and luminous flux that are of an optical system formed by the plane optical reflection component and a camera module 110 and an optical system formed by the concave-surface optical reflection component and the same camera module 110.

**Table 1**

| Surface form | Focal length of the camera module 110 | Diameter of a first lens of the camera module 110 | Aperture | Luminous flux |
|---|---|---|---|---|
| Plane | 50 mm | 34 mm | 1.6 | 1 (normalized) |
| Concave surface | 50 mm | 34 mm | 1.3 | 1.44 times |

The luminous flux of the plane optical reflection component is normalized, and the luminous flux of the concave-surface optical reflection component is 1.44 times the luminous flux of the plane optical reflection component. An increase in the luminous flux can improve luminance of the image captured by the camera module 110, so that the image is clearer and brighter.

### (2) The surface form of the optical reflection component 120 is the convex surface

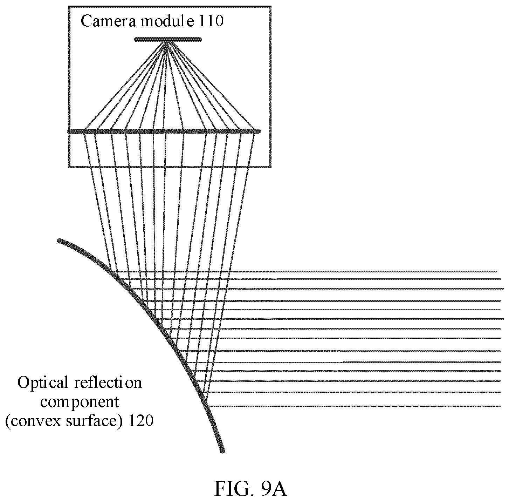

FIG. 9A is an optical path diagram when the surface form of the optical reflection component 120 is the convex surface. When the reflection surface is the convex surface, the optical reflection component 120 can diverge incident light into reflected light with a larger range, and project the reflected light onto the camera module 110. In other words, the convex-surface optical reflection component can diverge a light beam, and a range of reflected light of the convex-surface optical reflection component is larger than that of the plane optical reflection component. The reflected light enters the camera module 110, thereby increasing a field of view of the camera module 110, and increasing a coverage area of the image shoot by the camera module 110. In other words, at a same angle, the coverage range of the image shoot by the camera module 110 with the convex-surface optical reflection component is larger than a coverage range of the image shoot by the camera module 110 with the plane optical reflection component. In addition, the convex-surface optical reflection component shortens optical back focus length, so that the camera module 110 can shoot a nearby scene (similar to that a person with presbyopia can see the nearby scene after wearing glasses).

Table 2 is a comparison table of fields of view that are of an optical system formed by the plane optical reflection component and a camera module 110 and an optical system formed by the convex-surface optical reflection component and the same camera module 110.

**Table 2**

| Surface form | Focal length of the camera module 110 | Field of view |
|---|---|---|
| Plane | 50 mm | 10.4° |
| Convex surface | 50 mm | 11.44° |

It can be learned that the field of view of the optical system formed by the convex-surface optical reflection component and the camera module 110 is significantly larger than the field of view of the optical system formed by the plane optical reflection component and the camera module 110.

Optionally, the optical reflection component may alternatively be a surface-form variable reflector. The surface-form variable reflector is a reflector whose surface form may be changed based on a requirement, for example, a micromirror array or a liquid reflector. A specific type of the surface-form variable reflector is not limited in this embodiment of this application. All reflectors whose surface forms can be changed are applicable to this embodiment of this application.

In this embodiment of this application, the optical reflection component 120 may be an optical reflection component coated on one surface, in other words, one surface of the optical reflection component 120 can reflect light (as shown in FIG. 6A and FIG. 6B). Alternatively, the optical reflection component 120 may be an optical reflection component coated on two surfaces, in other words, the two surfaces of the optical reflection component 120 both can reflect light. In this way, when the optical reflection component 120 rotates, the optical reflection component 120 coated on two surfaces can be quickly switched to a surface capable of reflecting light, thereby ensuring that the camera module 110 can quickly perform shooting.

The optical reflection component 120 coated on two surfaces has the two surfaces capable of reflecting light, and the two surfaces can reflect light from opposite directions. In other words, the two surfaces can reflect light from two different directions. In this way, the camera module 110 can shoot people or objects in two opposite directions by using the optical reflection component 120.

A two-way pedestrian path is used as an example. On the two-way pedestrian path, pedestrians may walk from left to right or from right to left. To shoot the pedestrians in the two opposite directions (left to right and right to left), the optical system may be disposed in the middle of the two-way pedestrian path. The first driving component 130 or the second driving component 140 may drive the optical reflection component 120 to be switched to a surface capable of reflecting light, so that reflected light can enter the camera module 110, to shoot the pedestrians walking from left to right or from right to left.

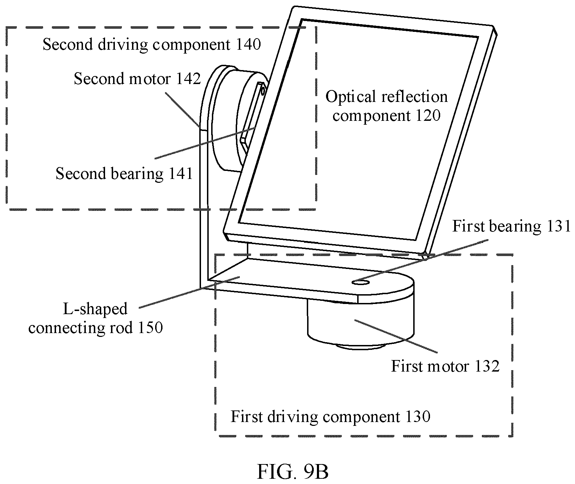

FIG. 9B is a schematic front view of the first driving component 130, the second driving component 140, and the optical reflection component 120 when the optical reflection component 120 is the optical reflection component coated on two surfaces. Structures of the first driving component 130 and the second driving component 140, and a connection relationship between the first driving component 130, the second driving component 140, and the optical reflection component 120 are same as the structures of the first driving component 130 and the second driving component 140, and a connection relationship between the first driving component 130, the second driving component 140, and the optical reflection component 120 shown in FIG. 6A. For details, refer to the foregoing content. Details are not described herein again.

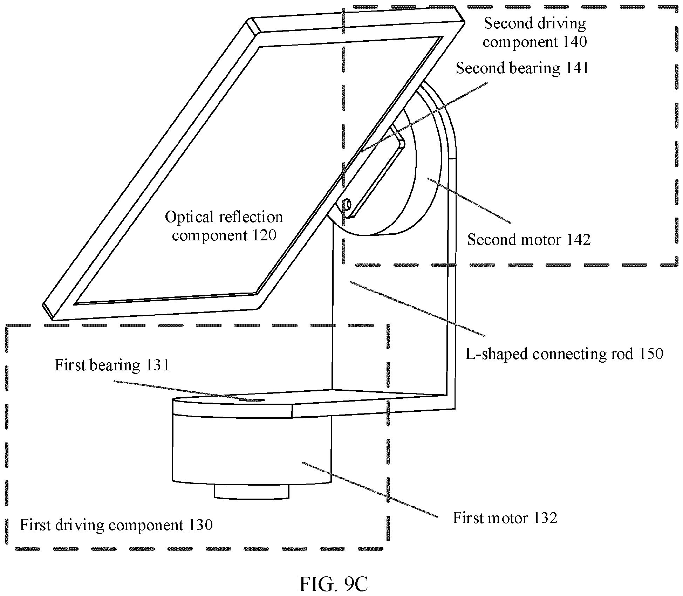

FIG. 9C is a schematic rear view of the first driving component 130, the second driving component 140, and the optical reflection component 120 when the optical reflection component 120 is the optical reflection component coated on two surfaces. Structures of the first driving component 130 and the second driving component 140, and a connection relationship between the first driving component 130, the second driving component 140, and the optical reflection component 120 are same as the structures of the first driving component 130, the second driving component 140, and a connection relationship between the first driving component 130, the second driving component 140, and the optical reflection component 120 shown in FIG. 6B. For details, refer to the foregoing content. Details are not described herein again.

It should be noted that, a back surface of the optical reflection component 120 shown in FIG. 6B is a back bracket of the optical reflection component, and a buckle may be disposed on an edge of the back bracket to connect to the second bearing 141. When the second driving component 140 drives the optical reflection component 120 to rotate, the back surface of the optical reflection component 120 does not need to turn to the camera module 110. To ensure that a person or an object in a relatively large range can be shot, the second driving component 140 needs to rotate the optical reflection component 140 by a relatively large angle.

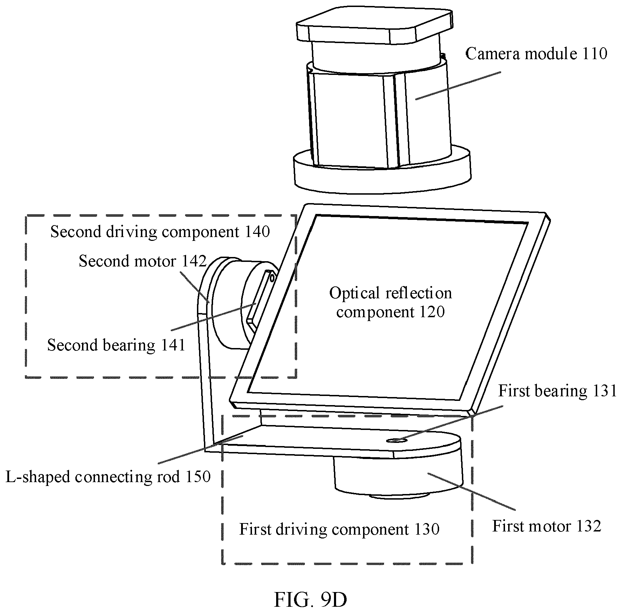

In FIG. 9C, because the optical reflection component 120 is the optical reflection component coated on two surfaces, the back surface of the optical reflection component 120 can be used as a reflection surface, to reflect light to the camera module 110. When the second driving component 140 drives the optical reflection component 120 to rotate, the back surface of the optical reflection component 120 may also be turned toward the camera module 110. FIG. 9D is a schematic front view of the first driving component 130, the second driving component 140, the camera module 110, and the optical reflection component 120. Because both a front surface and the back surface of the optical reflection component 120 may be used as reflection surfaces, the second driving component 140 only needs to drive the optical reflection component 140 to rotate by a relatively small angle, so that light can be reflected to the camera module 110 by using the front surface and the back surface of the optical reflection component 120. An implementation is simpler and more efficient.

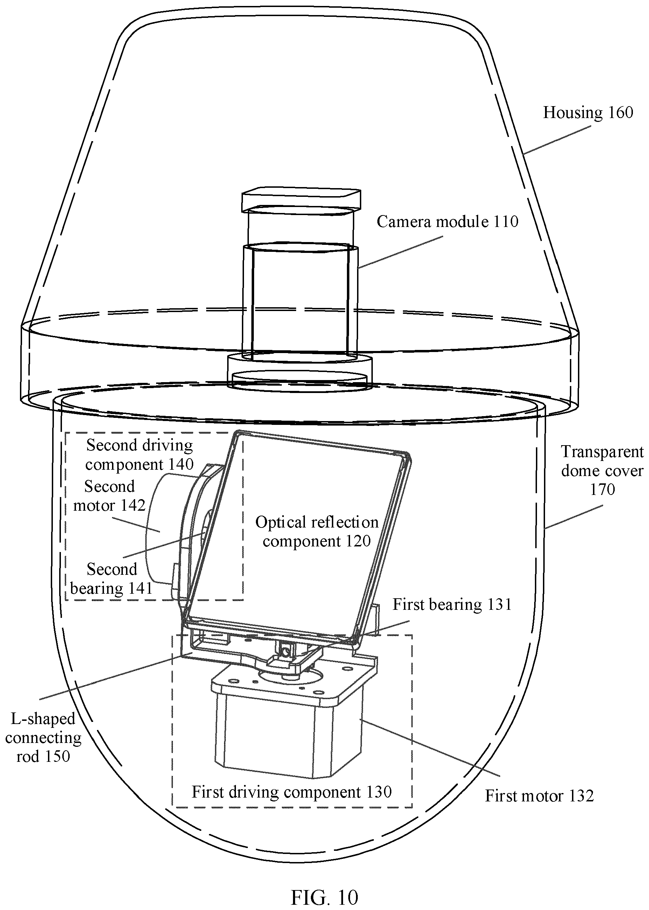

As a video surveillance device, the optical system further includes another component. As shown in FIG. 10, the optical system further includes a housing 160, and the housing 160 surrounds the camera module 110 on the outside. The housing 160 may be connected to the camera module 110, to ensure that a position of the camera module 110 can be fixed.

As shown in FIG. 10, the optical system further includes a transparent dome cover 170, the transparent dome cover 170 is connected to the housing 160, and the transparent dome cover 170 surrounds the first driving component 130, the second driving component 140, and the optical reflection component 120. Light may be projected onto the optical reflection component 120 through the transparent dome cover 170. A material of the transparent dome cover 170 is not limited in this application, for example, glass, polystyrene, or another transparent material.

In a possible implementation, the optical system may further include a bracket, and the bracket may be connected to the first driving component 130 and the camera module 110.

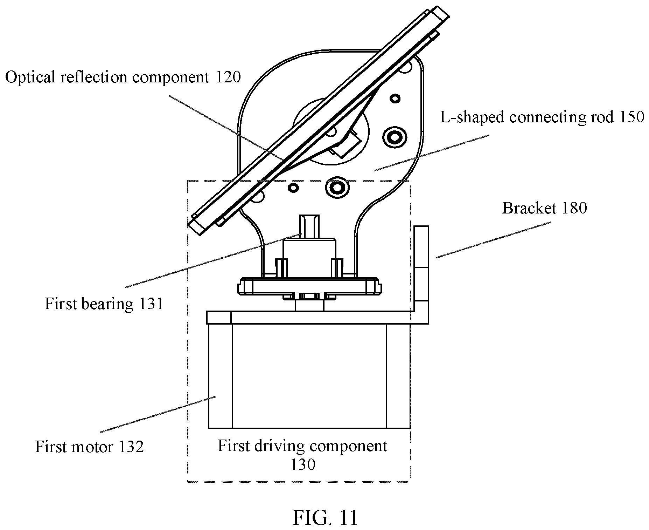

As shown in FIG. 11, in a schematic side view of the optical system, the first motor 132 in FIG. 11 is connected to a bracket 180, and the bracket 180 may extend upward to be connected to the camera module 110.

By using the optical system provided in this embodiment of this application, when the surface form of the optical reflection component 120 is the plane, an average snapshot speed obtained through measurement may reach two frames per second. It is clear that, compared with a common dome camera (0.2 frames per second), the image snapshot speed is significantly increased.

In the optical systems shown in FIG. 2 to FIG. 11, an example in which the camera module 110 is located above the optical reflection component 120 is used for description. In actual application, the camera module 110 may alternatively be located below the optical reflection component 120.

A structure in which the camera module 110 is located below the optical reflection component 120 may be applied to a scenario in which an object or a person below the optical reflection component 120 needs to be monitored or shot.

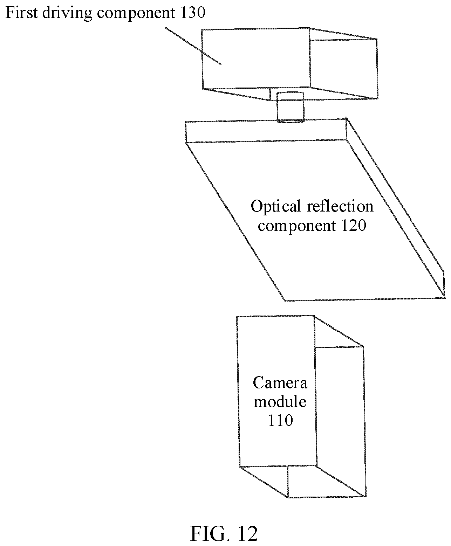

FIG. 12 is another optical system according to an embodiment of this application. The optical system includes a camera module 110 that is fixedly disposed, and the camera module 110 is opposite to a front surface of an optical reflection component 120. In FIG. 12, the camera module 110 is located below the optical reflection component 120.

A first driving component 130 can drive the optical reflection component 120 to rotate in a first direction. Driven by the first driving component 130, the optical reflection component 120 can reflect light in different directions to the camera module 110.

In the optical system, the camera module 110 may be fixed. In other words, the camera module 110 does not rotate or move. The first driving component drives only the optical reflection component 120 to rotate. For a manner in which the first driving component 130 drives the optical reflection component 120 and a specific direction of the first direction, refer to the foregoing content. Details are not described herein again.

In the optical system, the camera module 110 may alternatively rotate or move, and the camera module 110 may also move or rotate driven by the first driving component. In other words, the first driving component may drive the optical reflection component 120 to rotate in the first direction, and also drive the camera module 110 to rotate in the first direction. A rotation direction of the camera module 110 and a rotation direction of the optical reflection component 120 are consistent. In this way, the optical reflection component 120 may change a position of the optical reflection component 120 by using the first driving component, to reflect the light in the different directions, so that the camera module 110 may shoot images or videos at different angles by using the optical reflection component 120. In addition, driven by the first driving component, both the optical reflection component 120 and the camera module 110 move, and a relative position of the optical reflection component 120 and the camera module 110 is not easily changed, thereby facilitating imaging.

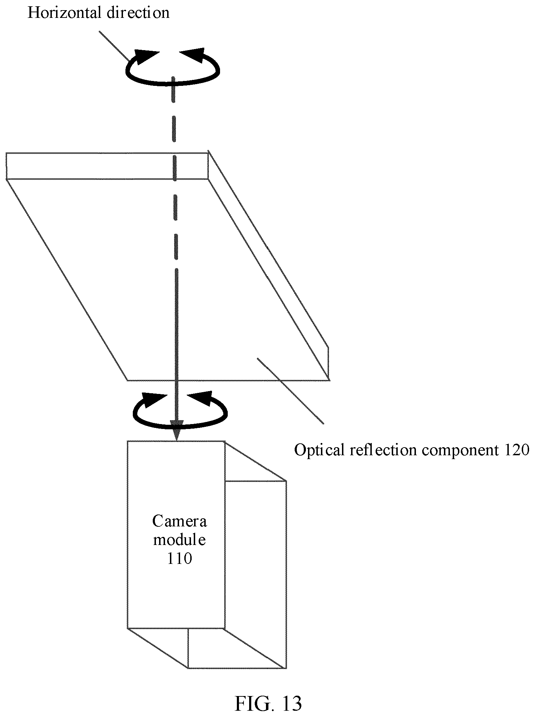

An example in which the first direction is a horizontal direction is used. FIG. 13 shows rotation ranges that are of the camera module 110 and the optical reflection component 120 when the first direction is the horizontal direction. In FIG. 13, the camera module 110 and the optical reflection component 120 may rotate 360 degrees, so that a shooting range of the camera module 110 is larger. It should be noted herein that the rotation ranges that are of the camera module 110 and the optical reflection component 120 shown in FIG. 13 are merely examples, and may be set based on a specific scenario in actual application. For example, the optical system may be installed above a display screen. When a video conference is performed by using the display screen, the optical system may shoot only a person or an object located in a front range of the display screen, and the rotation ranges that are of the camera module 110 and the optical reflection component 120 may be set to an angle of 180 degrees or less. A case in which the first direction is a gravity direction is also similar. Details are not described herein again. When the first direction is the gravity direction, the rotation ranges that are of the camera module 110 and the optical reflection component 120 may also be changed based on a specific application scenario, so that the shooting range of the camera module 110 is wider.

Alternatively, the camera module 110 may move or rotate driven by another driving component. For example, the camera module 110 may move toward or away from the optical reflection component 120 driven by the another driving component. In other words, a distance between the camera module 110 and the optical reflection component 120 is controllable. After the distance between the camera module 110 and the optical reflection component 120 is changed, a distance between the camera module 110 and a shot object can be changed, and a size of an object or a person in a shot image or video can be flexibly adjusted.

For a structure of the first driving component 130, refer to related descriptions in FIG. 4A to FIG. 4C. Details are not described herein again. It should be noted that when the first driving component 130 needs to drive the camera module 110 to rotate, the first driving component may include a bearing connected to the camera module 110, to ensure that when a first motor 132 drives the optical reflection component 120 to rotate by using a first bearing, the camera module 110 may also be driven to rotate by using the bearing connected to the camera module 110.

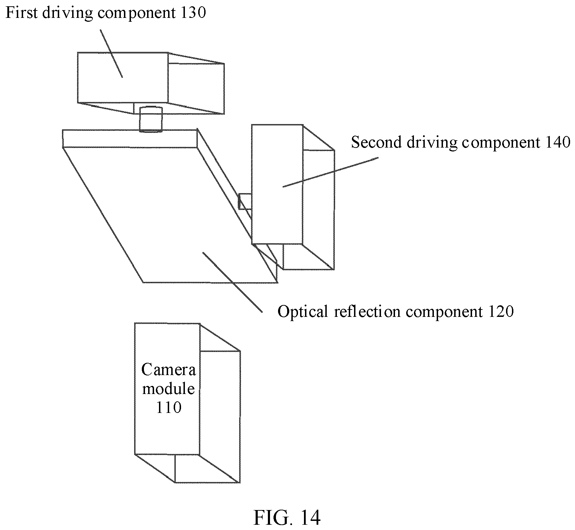

In the optical system shown in FIG. 12 and FIG. 13, the optical reflection component 120 may rotate in one direction, namely, the first direction, driven by the first driving component 130. To further increase the rotation range of the optical reflection component 120 and expand the shooting range of the camera module 110, as shown in FIG. 14, the optical system may further include a second driving component 140. The second driving component 140 may drive the optical reflection component 120 to rotate in a second direction. The first direction is different from the second direction. The structure of the first driving component 130 is similar to a structure of the second driving component 140. For details, refer to the structure of the first driving component 130. Details are not described herein again.

An example in which the first direction is the horizontal direction and the second direction is a perpendicular direction is used. When the optical reflection component 120 rotates in the horizontal direction driven by the first driving component 130, the camera module 110 can shoot a picture or video within a specific range at a specific height (the height is related to a height set by the camera module 110) by using the optical reflection component 120. The range is related to an angle at which the optical reflection component 120 is rotated. For example, the optical reflection component 120 may rotate 360 degrees in the horizontal direction, and the camera module 110 may shoot a person or an object at a specific height.

When the optical reflection component 120 rotates in the perpendicular direction driven by the second driving component 140, the camera module 110 can shoot images or videos at different heights by using the optical reflection component 120. The height range is related to an angle at which the optical reflection component 120 rotates in the perpendicular direction. A larger angle at which the optical reflection component 120 rotates in the perpendicular direction indicates a larger height range. The camera module 110 can shoot an image or a video within a relatively large height range.

The optical reflection component 120 can rotate simultaneously in the first direction and the second direction, so that a rotation range of the optical reflection component 120 can be effectively extended, and further, a field of view of the camera module 110 can be expanded, and the shooting range can be expanded.

For a process in which the first driving component 130 drives the optical reflection component 120 to rotate and a process in which the second driving component 140 drives the optical reflection component 120 to rotate, refer to the foregoing content. Details are not described herein again.

In the optical system, the camera module 110 may be fixed, or may move or rotate driven by the second driving component. In other words, the second driving component may drive the optical reflection component 120 to rotate in the second direction, or may drive the camera module 110 to rotate in the second direction. The rotation direction of the camera module 110 and the rotation direction of the optical reflection component 120 are consistent. By using the second driving component, the optical reflection component 120 and the camera module 110 may rotate together, and the optical reflection component 120 can reflect the light in different directions, so that the camera module 110 can shoot the images or videos at different angles by using the optical reflection component 120. The camera module 110 may alternatively move or rotate in a direction different from the first direction or the second direction driven by another driving component.

The following further describes the optical system provided in this embodiment of this application by using an example in which the first direction is the horizontal direction and the second direction is the perpendicular direction.

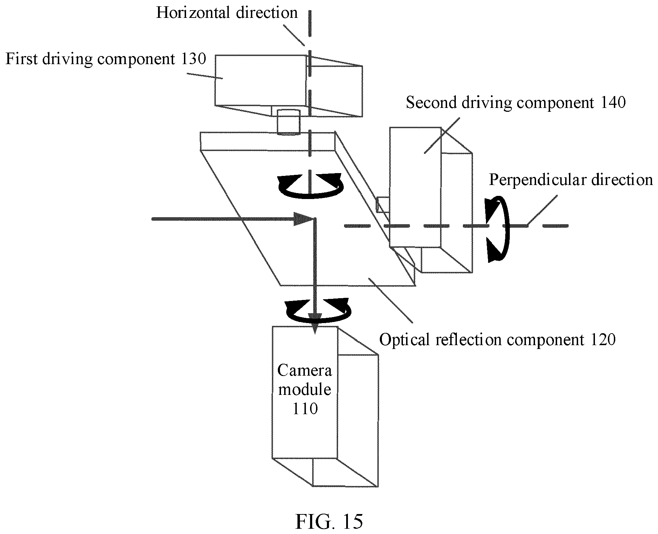

FIG. 15 shows an optical system according to an embodiment of this application. In the optical system, the first driving component 130 may drive the optical reflection component 120 to rotate in the horizontal direction, and the second driving component 140 drives the optical reflection component 120 and the camera module 110 to rotate in the perpendicular direction.

It should be noted that, when the second driving component 140 needs to drive the camera module 110 to rotate, the second driving component may include a bearing connected to the camera module 110, to ensure that when a second motor 142 drives the optical reflection component 120 to rotate by using a second bearing 141, the camera module 110 may also be driven to rotate by using the bearing connected to the camera module 110.

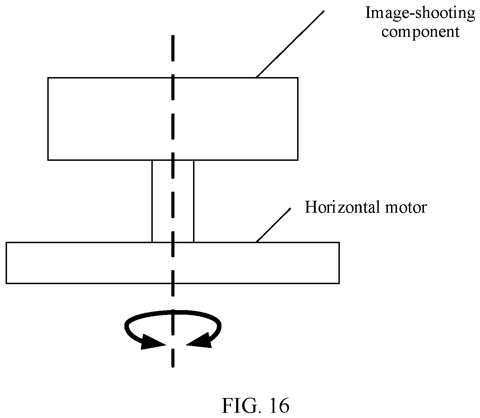

When a conventional image-shooting component performs shooting, the conventional image-shooting component may be externally disposed above a device (for example, a display or a television screen), and the image-shooting component may rotate to implement shooting. In this manner, a shooting range of the image-shooting component is related to a rotation angle of the image-shooting component. However, a diameter of the image-shooting component when the image-shooting component rotates is equal to a length of the image-shooting component. In this case, a space (namely, a rotation space of the image-shooting component) that needs to be occupied by the image-shooting component above the device is relatively large. As shown in FIG. 16, the image-shooting component is located above the device (for example, the display or the television screen), a person or an object around the device can be shot only when the image-shooting component rotates horizontally driven by a horizontal motor. The image-shooting component shown in FIG. 16 is disposed above the device in a horizontal manner, so that the rotation space of the image-shooting component becomes larger. However, in the optical system shown in FIG. 12 to FIG. 15, because the camera module 110 is located below the optical reflection component 120, the camera module 110 may not rotate, and the shooting range of the camera module 110 is related to the rotation range of the optical reflection component 120. Rotation of the optical reflection component 120 in different directions can effectively extend the shooting range of the camera module 110. A volume that needs to be occupied by the entire optical system is related to the rotation range of the optical reflection component 120, and because the optical reflection component 120 is located above the camera module 110, the optical reflection component 120 and the camera module 110 are vertically disposed. In this way, a horizontal width of the entire optical system can be shortened. Compared with a volume that needs to be occupied by the conventional image-shooting component disposed on the device, the volume of the optical system can be greatly reduced, making it possible to dispose the optical system inside the device.

In addition, the optical reflection component 120 may rotate in the first direction and the second direction, and the rotation range is relatively large. This can effectively extend the field of view of the camera module 110 and increase the shooting range.

The optical system shown in FIG. 12 to FIG. 15 may be applied to a display screen or a display, and is disposed on the top of the display screen or the display, or embedded in an upper part of the display screen or the display. The optical system shown in FIG. 12 to FIG. 15 may also be disposed in another device. Herein, only the display screen or the display is used as an example for description.

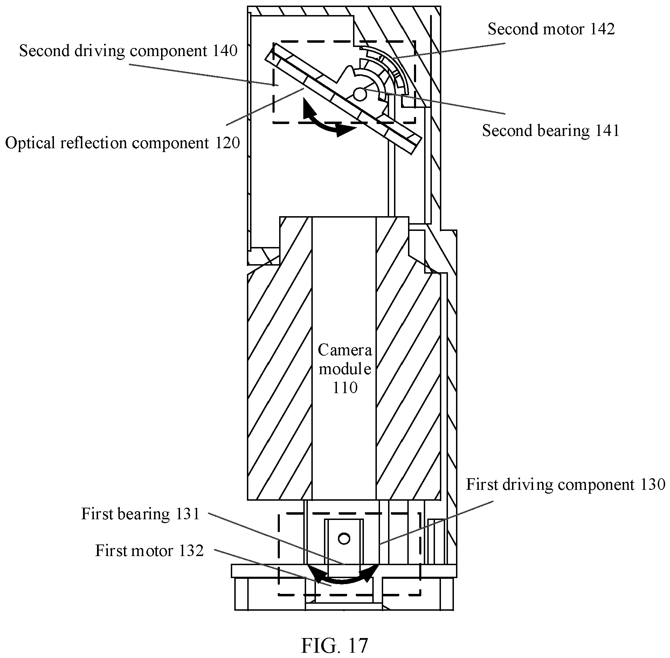

FIG. 17 is a schematic structural diagram of an optical system embedded in the upper part of the display screen. FIG. 17 is a cross-sectional view of the display screen. The optical system is located in the upper part of the display screen. The second motor 142 in the second driving component 140 drives the second bearing 141, so that the optical reflection component 120 can rotate in the perpendicular. The first driving component 130 is located below the entire optical system. The first motor 132 in the first driving component 130 drives the first bearing 131, so that the first bearing 131 drives the optical reflection component 120 and the camera module 110 to rotate together in the horizontal direction.

An embodiment of this application further provides an electronic device. The electronic device includes a processor and any optical system described in the foregoing content. The processor can obtain an image shot by a camera module 110 in the optical system. The processor can further process the image, for example, perform operations such as correction and encoding.

The electronic device further includes a communication interface, configured to transmit data to another device. For example, the processor may transmit an obtained image or a processed image to the another device through the communication interface.

Obviously, a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. An optical system, wherein the optical system comprises a camera module, an optical reflection component, and a first driving component, wherein
the camera module is fixed in a position, and is disposed opposite to a front surface of the optical reflection component;
the optical reflection component is configured to reflect, to the camera module, light projected onto the optical reflection component;
the camera module is configured to capture an image by using the light reflected by the optical reflection component; and
the first driving component is configured to drive the optical reflection component to rotate in a first direction.

2. The optical system according to claim 1, wherein the optical system further comprises a second driving component; and
the second driving component is configured to drive the optical reflection component to rotate in a second direction, and the first direction is different from the second direction.

3. The optical system according to claim 1 or 2, wherein the camera module is fixedly disposed in a gravity direction.

4. The optical system according to any one of claims 1 to 3, wherein the camera module is located below the optical reflection component.

5. The optical system according to any one of claims 1 to 4, wherein the first driving component comprises a first motor and a first bearing; and
the first motor is configured to drive the first bearing, so that the first bearing drives the optical reflection component to rotate in the first direction.

6. The optical system according to any one of claims 2 to 5, wherein the second driving component comprises a second motor and a second bearing, and the second bearing is connected to the optical reflection component; and
the second motor is configured to drive the second bearing, so that the second bearing drives the optical reflection component to rotate in the second direction.

7. The optical system according to claim 5 or 6, wherein the first bearing is connected to a back surface or a side surface of the optical reflection component.

8. The optical system according to claim 5 or 6, wherein the first bearing is connected to the second motor through a connecting rod.

9. The optical system according to any one of claims 1 to 8, wherein the optical reflection component is a surface-form fixed reflector, and a surface form of the surface-form fixed reflector is one of the following:
a plane, a convex surface, a concave surface, a diffraction surface, and a free-form surface.

10. The optical system according to any one of claims 1 to 8, wherein the optical reflection component is a surface-form variable reflector, and the surface-form variable reflector may be one of the following:
a micromirror array and a liquid reflector.

11. The optical system according to any one of claims 1 to 10, wherein the optical reflection component is an optical reflection component coated on two surfaces.

12. The optical system according to any one of claims 2 to 11, wherein the first direction is perpendicular to the second direction.

13. The optical system according to claim 12, wherein the second direction is the gravity direction.

14. The optical system according to claim 13, wherein the second bearing is connected to a side surface or a back surface of the reflection optical component.

15. The optical system according to any one of claims 1 to 14, wherein the optical system further comprises a bracket, and the first driving component is connected to the camera module by using the bracket.

16. The optical system according to any one of claims 1 to 15, wherein the optical system further comprises a housing, and the housing is located outside the camera module.

17. The optical system according to any one of claims 1 to 16, wherein the optical system further comprises a transparent dome cover; and the transparent dome cover is connected to the housing, and is located outside the first driving component and the optical reflection component.

18. An electronic device, comprising a processor and an image-shooting apparatus, wherein the image-shooting apparatus comprises the optical system according to any one of claims 1 to 17.

19. An optical system, wherein the optical system comprises a camera module, an optical reflection component, and a first driving component, wherein
the camera module is disposed opposite to a front surface of the optical reflection component, and the camera module is located below the optical reflection component;
the optical reflection component is configured to reflect, to the camera module, light projected onto the optical reflection component;
the camera module is configured to capture an image by using the light reflected by the optical reflection component; and
the first driving component is configured to drive the optical reflection component to rotate in a first direction.

20. The optical system according to claim 19, wherein the optical system further comprises a second driving component; and
the second driving component is configured to drive the optical reflection component to rotate in a second direction, and the first direction is different from the second direction.

21. The optical system according to claim 19 or 20, wherein the camera module is disposed in a gravity direction.

22. The optical system according to any one of claims 19 to 21, wherein the first driving component comprises a first motor and a first bearing; and
the first motor is configured to drive the first bearing, so that the first bearing drives the optical reflection component to rotate in the first direction.

23. The optical system according to any one of claims 20 to 22, wherein the second driving component comprises a second motor and a second bearing, and the second bearing is connected to the optical reflection component; and
the second motor is configured to drive the second bearing, so that the second bearing drives the optical reflection component to rotate in the second direction.

24. The optical system according to claim 22 or 23, wherein the first bearing is connected to a back surface or a side surface of the optical reflection component.

25. The optical system according to claim 22 or 23, wherein the first bearing is connected to the second motor through a connecting rod.

26. The optical system according to any one of claims 19 to 25, wherein the optical reflection component is a surface-form fixed reflector, and a surface form of the surface-form fixed reflector is one of the following:
a plane, a convex surface, a concave surface, a diffraction surface, and a free-form surface.

27. The optical system according to any one of claims 19 to 25, wherein the optical reflection component is a surface-form variable reflector, and the surface-form variable reflector may be one of the following:
a micromirror array and a liquid reflector.

28. The optical system according to any one of claims 19 to 27, wherein the optical reflection component is an optical reflection component coated on two surfaces.

29. The optical system according to any one of claims 20 to 28, wherein the first direction is perpendicular to the second direction.

30. The optical system according to claim 29, wherein the second direction is the gravity direction.

31. The optical system according to claim 30, wherein the second bearing is connected to a side surface or a back surface of the reflection optical component.

32. The optical system according to any one of claims 19 to 31, wherein the optical system further comprises a bracket, and the first driving component is connected to the camera module by using the bracket.

33. The optical system according to any one of claims 19 to 32, wherein the optical system further comprises a housing, and the housing is located outside the camera module.

34. The optical system according to any one of claims 19 to 33, wherein the optical system further comprises a transparent dome cover; and the transparent dome cover is connected to the housing, and is located outside the first driving component and the optical reflection component.

35. An electronic device, comprising a processor and an image-shooting apparatus, wherein the image-shooting apparatus comprises the optical system according to any one of claims 19 to 34.

36. A display apparatus, comprising the optical system according to any one of claims 19 to 34, wherein the optical system is disposed above the display apparatus.
